Europäisches Patentamt

European Patent Office

Office européen des brevets

(11) Veröffentlichungsnummer: **0 197 446**
**A1**

## (12) EUROPÄISCHE PATENTANMELDUNG

(21) Anmeldenummer: **86104212.5**

(22) Anmeldetag: **26.03.86**

(51) Int. Cl.4: **H04N 7/137** , H04N 7/13

(30) Priorität: **29.03.85 DE 3511660**

(43) Veröffentlichungstag der Anmeldung:
**15.10.86 Patentblatt 86/42**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Grallert, Hans-Joachim, Dr. Ing.**
**Tannenfleckstrasse 30**
**D-8038 Gröbenzell(DE)**

(54) Verfahren zur Verbesserung der Bildqualität bei DPCM-codierten Bildsignalen.

(57) Verfahren zur Verbesserung der Bildqualität bei zweidimensionaler Differenzpulscodemodulation mit umschaltbaren Quantisierungskennlinien bei Überschreiten der Maximalwerte des Quantisierungsbereiches einer Quantisierungskennlinie (QK1) wird ein Korrektursignal (KS) ausgesendet das diese Überschreitung kennzeichnet und statt des verfälschten DPCM-Wertes ($\Delta s$) einen Korrekturwert (DK) beinhaltet.

FIG 1

EP 0 197 446 A1

Rank Xerox

Verfahren zur Verbesserung der Bildqualität bei DPCM-codierten Bildsignalen

Die Erfindung betrifft ein Verfahren zur Verbesserung der Bildqualität, bei dem digitalisierte Bildsignalwerte unter Verwendung einer mehrdimensionalen, insbesondere einer zweidimensionalen, Prädiktion und von umschaltbaren Quantisierungskennlinien in quantisierte DPCM-Werte umgesetzt werden.

Zur Übertragung von Bildsignalen wird zur Verringerung der Übertragungsrate häufig die Differenzpulscodemodulation (DPCM) eingesetzt. Am gebräuchlichsten ist hierbei die zweidimensionale DPCM, bei der ein Schätz-oder Prädiktionswert aus Bildsignalwerten errechnet wird, die an den aktuellen zu verarbeitenden Bildsignalwert angrenzen. Eine DPCM-Codierung mit zweidimensionaler Prädiktion ist bereits erstaunlich leistungsfähig. Um Flächenrauschen (granular noise) und Überschwingen (slope overload) zu vermeiden, wird zwischen mehreren Quantisierungskennlinien umgeschaltet, so daß die Quantisierung bei kleinen Differenzen zwischen Schätzwert und aktuellen Bildsignalwert in kleinen Quantisierungsstufen erfolgt; bei großen Differenzen, wie sie an Kanten auftreten, wird einen gröbere Quantisierung verwendet, wobei jedoch der Quantisierungsfehler aufgrund des Verdeckungseffektes für das menschliche Auge weitgehend unsichtbar ist. Obwohl die zweidimensionale Quantisierung -auch bei Kanten -erstaunliches leistet, so ergeben sich doch bei geometrischen Flächen, wie sie beispielsweise bei Gebäuden oder bei Schriftvorlagen häufig anzutreffen sind, an den Ecken deutlich sichtbare Bildfehler.

Diese können zwar durch eine dreidimensionale Prädiktion mit dem hierbei erforderlichen hohen Speicheraufwand verringert werden, bleiben jedoch weiterhin störend.

Aufgabe der Erfindung ist es, die Bildqualtiät bei zweidimensionaler DPCM-Codierung zu verbessern.

Ausgehend vom eingangs angegebenen Verfahren wird die Aufgabe dadurch gelöst, daß beim Überschreiten der Maximalwerte einer Quantisierungskennlinie durch den aktuellen DPCM-Wert ein Korrektursignal übertragen wird und sowohl sendeseitig als auch empfangsseitig der nächste rekonstruierte Bildsignalwert mit Hilfe desselben Korrekturwertes ermittelt wird.

Die Erfindung beruht auf der Erkenntnis, daß Bildfehler durch die Verwendung der ungeeigneten Quantisierungskennlinie hervorgerufen werden. Das Umschaltkriterium für den sendeseitigen Quantisierer und für die entsprechende empfangsseitige Decodiereinrichtung kann jeweils nur mit Hilfe der rekonstruierten Bildsignalwerte erfolgen, da der Gleichlauf zwischen Coder und Decoder nicht gestört werden darf. Dem Decoder ist naturgemäß ein Blick in die Zukunft versagt, der Coder, der ja dieselbe Steuerlogik verwendet jedoch eine Fehlsteuerung des Quantisierers rechtzeitig bemerkt, korrigiert seinen Fehler und teilt dieses durch das Korrektursignal auch dem Decoder mit, in dessen Rechenschleife derselbe Korrekturwert eingespeist wird. Durch diese Prozedur treten kritische Bildsignalfehler an Kanten nicht mehr störend in Erscheinung und der Gleichlauf zwischen Coder und Decoder wird nicht gestört.

Es ist vorteilhaft, daß als Korrektursignal ein Kennwort und ein PCM-Korrekturwert übertragen werden und außerdem zweckmäßig daß der PCM-Korrekturwert quantisiert übertragen wird.

An Stelle eines verfälschten DPCM-Wertes wird der entsprechende PCM-Bildsignalwert übertragen und sowohl sende-als auch empfangsseitig zur Berechnung der weiteren Schätzwerte verwendet. Es ist hierbei ausreichend, daß dieser PCM-Wert ebenfalls quantisiert übertragen wird.

Es ist ebenfalls vorteilhaft, daß als Korrektursignal ein Kennwort zur Umschaltung der Quantisierungskennlinie auf eine gröbere Quantisierungskennlinie mit größerem Quantisierungsbereich und ein entsprechend dieser Quantisierungskennlinie quantisierter PCM-Korrekturwert übertragen wird.

Es ist für die meisten Anwendungsfälle ausreichend und benötigt nur einen minimalen zusätzlichen Aufwand, wenn das Korrektursignal nur zur Umschaltung auf die richtige Quantisierungskennlinie verwendet wird. Bei hohen Kontrasten bleibt zwar ein Restfehler übrig, jedoch ergibt sich eine deutliche Verbesserung der Bildqualität.

Es ist zweckmäßig, daß stets auf die gröbste Quantisierungskennlinie umgeschaltet wird.

Da bei großen DPCM-Werten der Quantisierungsfehler nicht sonderlich kritisch ist, wird auf die gröbste Quantisierungskennlinie umgeschaltet. Entsprechend den verwendeten Quantisierungskennlinien kann diese Umschaltung auch von der feinsten Quantisierungskennlinie oder den beiden feinsten Quantisierungskennlinien auf die gröbste beschränkt werden.

Es ist vorteilhaft, daß stets auf eine zusätzliche Quantisierungskennlinie, deren Bereich erweitert ist und kleine DPCM-Werte nicht mehr umfaßt, umgeschaltet wird.

Da die Quantisierungsbereiche um Null nicht benötigt werden, ist es möglich, die entsprechenden Binärkombinationen zur Übertragung größerer DPCM-Werte als sonst möglich zu verwenden. Die Übertragung dieser DPCM-Werte erfolgt zweckmäßigerweise direkt nach dem Kennwort.

Es ist zweckmäßig, daß als Kennungswort eine nicht verwendete Binärkombination der codierten DPCM-Werte übertragen wird.

Bei dieser Ausbildung wird die Datenrate nicht erhöht und es werden keine Pufferspeicher benötigt. Bei diesem Verfahren wird annähernd die gleiche Bildverbesserung wie bei einer Umschaltung der Quantisierungskennlinie erzielt.

Weitere vorteilhafte Ausbildungen der Erfindung sind in den übrigen Unteransprüchen angegeben.

Das Verfahren wird anhand von Ausführungsbeispielen näher erläutert.

Es zeigen

Fig. 1 das Prinzipschaltbild eines DPCM-Coders,

Fig. 2 das Prinzipschaltbild eines DPCM-Decoders,

Fig. 3 eine Variante des DPCM-Coders,

Fig. 4 das Prinzipschaltbild eines DPCM-Coders zur Korrektur der DPCM-Werte,

Fig. 5 das Prinzipschaltbild eines zugehörigen DPCM-Decoders und

Fig. 6 einen Ausschnitt aus einem Fernsehbild.

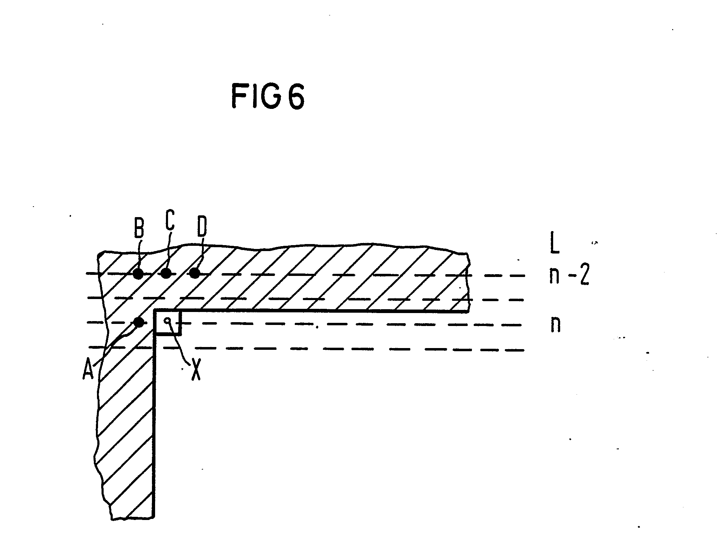

In Fig. 6 ist ein Ausschnitt aus einem Fernsehbild bei Anwendung der Fernsehhalbbildübertragung dargestellt. Es sind die Bildpunkte A bis D und X eines Fernsehhalbbildes von Fernsehzeilen L = n-2 und n dargestellt.

$$DS < 32$$
$$32 \leq DS < 64$$
$$64 \leq DS < 96$$
$$96 \leq DS$$

Bei der in Fig. 6 dargestellten Bildkonfiguration tritt jetzt folgendes Problem auf, das hier für einen speziellen Bildsignalwert X abgehandelt wird. Die Differenzen zwischen den Bildsignalwerten $A_r$ bis $D_r$ sind gleich Null. Folglich wird die Quantisierungskennlinie QK1 eingestellt. Es wird der Schätzwert $\hat{X} = 0$ ermittelt. Die Differenz zwischen Wegen der rekursiven Struktur des Coders und des Decoders werden statt der ursprünglichen Bildsignalwerte s = A,B,... die rekonstruierten Bildsignalwerte $s_r = A_r, B_r...$ zur Berechnung des Schätzwertes $\hat{S}$ verwendet. Hierdurch bleibt auch der Gleichlauf zwischen Coder und Decoder erhalten.

Für die Berechnung eines Schätz-oder Prädiktionswertes s = $\hat{X}$ gilt beispielsweise:

$$\hat{X} = \tfrac{1}{2} A_r + \tfrac{1}{8} B_r + \tfrac{1}{4} C_r + \tfrac{1}{8} D_r$$

Die Berechnung des Schätzwertes erfolgt also mit Hilfe der den aktuellen Bildsignalwert X umgebenen Bildsignalwerte A, B, C und D, die Abtastwerten entsprechen. Es wird angenommen, daß hier das Luminanzsignal codiert und übertragen werden soll. Für Farbdifferenzsignale gilt das gleiche sinngemäß. Der schraffierte Bereich, in dem die Bildsignalwerte A bis D liegen, entspricht dem Bildsignalwert Null, also schwarz, und der nächste Bildsignalwert X entspricht dem maximalen Bildsignalwert, hier dem, Zahlenwert 255, also weiß. Der folgende Schätzwert $\hat{y}$, wird aus den Bildsignalwerten $X_r$, $C_r$, $D_r$ und $E_r$ ermittelt.

Die Steuerung des Quantisierers erfolgt durch Bildung der Differenzen der rekonstruierten Bildsignalwerte $A_r$ bis $D_r$.

$$DS = Max \{|A_r\text{-}B_r|, |A_r\text{-}C_r|, |A_r\text{-}D_r|, |B_r\text{-}C_r|, |B_r\text{-}D_r|, |C_r\text{-}D_r|\};$$

Die maximale Differenz DS bestimmt die zu verwendende Quantisierungskennlinie QK1 bis QK4. In der folgenden Tabelle sind die Bereiche von 4 verschiedenen Quantisierungskennlinien QK1 bis QK4 und ihre Zuordnung zu den verschiedenen Differenzen DS dargestellt. Eine zusätzliche Quantisierungskennlinie QK5 kann bei der Übertragung von Korrekturwerten zweckmäßig sein.

$$QK1 : \pm 55$$
$$QK2 : \pm 65$$
$$QK3 : \pm 75$$
$$QK4 : \pm 120$$
$$QK5 : \pm 56 ... \pm 255$$

Schätzwert $\hat{X}$ und dem folgenden Bildsignalwert X erreicht das Maximum von 255. Es kann jedoch entsprechend der Quantisierungskennlinie QK1 nur der maximale DPCM-Wert M1 = ±55 übertragen werden. Die Differenz zwischen dem "falsch codierten" ausgesendeten DPCM-Wert der Größe 55 und dem korrekten DPCM-Wert von 255 bewirkt bei Ecken in Bildvorlagen natürlich sichtbare Störungen.

Da empfangsseitig zur Steuerung einer dem Quantisierer und dem üblicherweise nachgeschalteten Codierer entsprechenden Decodiereinrichtung ebenfalls nur die bereits rekonstruierten Bildsignalwerte $A_r$ bis $D_r$ zur Verfügung stehen wird naturgemäß der nächste Bildsignalwert $X_r$ wie beim DPCM-Coder nach derselben Quantisierungskennlinie falsch rekonstruiert. Bei allen zu treffenden Maßnahmen ist bekannterweise stets zu berücksichtigen, daß die Prädiktionsschleifen des DPCM-Coders und des DPCM-Decoders stets synchron laufen.

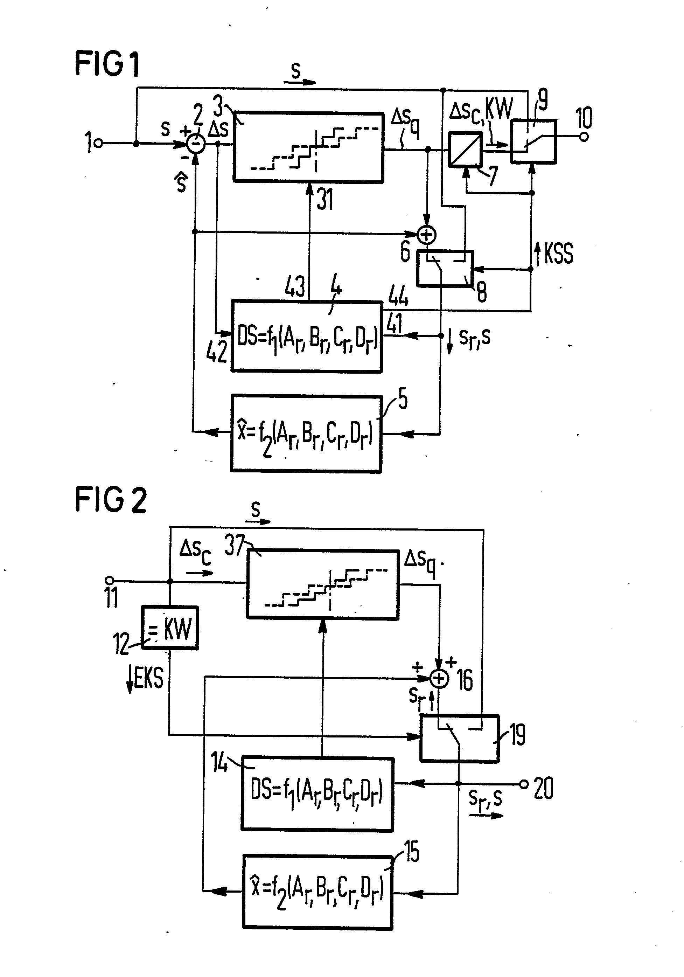

In Fig. 1 ist das Prinzipschaltbild eines DPCM-Coders zur Realisierung des erfindungsgemäßen Verfahrens dargestellt. Dem Codereingang 1 werden digitalisierte Abtastwerte (Luminanz-oder Chrominanzwerte), hier als Bildsignalwerte s bezeichnet, zugeführt. Der Codereingang ist mit dem ersten Eingang eines Subtrahierers 2 verbunden, dessen Ausgang mit dem Eingang eines steuerbaren Quantisierers 3 verbunden ist. Der Ausgang des Quantisierers 3 ist über einen ersten Addierer 6 und einen ersten Umschalter 8 mit einem Eingang 41 einer Quantisierersteuerlogik 4 und dem Eingang eines Prädiktors 5 verbunden. Der Ausgang des Prädiktors 5 ist mit dem zweiten Eingang des Addierers 6 und mit dem Subtraktionseingang des Subtrahierers 2 verbunden. Ein weiterer Eingang 42 der Quantisierersteuerlogik ist mit dem Ausgang des Subtrahierers 2 verbunden. Ein erster Steuerausgang 43 der Quantisierersteuerlogik ist mit einem Steuereingang 31 des Quantisierers 3 verbunden. An den Ausgang des Quantisierers ist ein Codierer 7 angeschaltet, dessen Ausgang mit dem ersten Eingang eines zweiten Umschalters 9 verbunden ist. Der zweite Eingang dieses Umschalters ist ebenso wie der zweite Eingang des ersten Umschalters 8 direkt mit dem Codereingang 1 verbunden. Der Ausgang des zweiten Umschalters 9 bildet den Ausgang 10 des Coders. Die beiden Umschalter 8 und 9 werden über einen zweiten Steuerausgang 44 der Quantisierersteuerlogik 4 betätigt. Dieser Steuereingang greift auch in den Codierer 7 ein.

Befinden sich die beiden Umschalter 8 und 9 in der dargestellten Lage, so arbeitet der dargestellte Coder in der üblichen Weise. In dem Prädiktor 5 wird der Schätzwert $\hat{s}$ ermittelt, dieser wird im Subtrahierer 2 von dem aktuellen Bildsignalwert s abgezogen und der DPCM-Wert $\Delta s$ wird dem Quantisierer 3 zugeführt, dessen Quantisierungskennlinie von der Quantisierungssteuerlogik 4 bestimmt wird. Die am Ausgang des Quantisierers 3 anliegenden quantisierten DPCM-Werte $\Delta s_q$ werden dem Codierer 7 zugeführt, der zur Datenreduktion jeder Quantisierungsstufe eine Binärkombination zuordnet. Werden beispielsweise 15stufige Quantisierungskennlinien QK1 bis QK4 verwendet, so werden die Binärkombination 0000 bis 1110 verwendet.

Tritt nun der einleitend geschilderte Fall einer notwendigen Korrektur der DPCM-Werte ein, bei dem der DPCM-Wert $\delta$ größer ist als der maximal bei der eingestellten Quantisierungskennlinie, z.B. QK1, übertragbare DPCM-Wert, so wird durch die Quantisierersteuerlogik 4 durch Abgabe eines Korrektursteuersignals KSS zunächst der Codierer 7 veranlaßt ein Korrektursignal KS auszusenden, zunächst ein Kennungswort KW = 1111, das hier einer nicht verwendeten Binärkombination des Codierers 7 entspricht. Anschließend werden beide Umschalter 8 und 9 betätigt und der entsprechende Bildsignalwert s (bzw. X nach Fig. 6) übertragen und gleichzeitig -wie ein rekonstruierter Bildsignalwert $s_r$ -in den Prädiktor 5 übernommen.

Bei diesen Verfahren ist es also notwendig, ein zusätzliches Kennungswort und ein eventuell längeres DPCM-Wort zu übertragen. Deshalb sind elastische Speicher notwendig. Dies gilt natürlich auch bei Anwendung einer Optimalcodierung. Die Taktversorgung dieser Speicher erfolgt zweckmäßigerweise über Phasenregelkreise.

In Fig. 2 ist das Prinzipschaltbild des zugehörigen DPCM-Decoders dargestellt. Der Decodereingang 11 ist mit einer Decodiereinrichtung 37, einer Erkennungsschaltung 12 und einem zweiten Eingang eines Umschalters 19 verbunden. Der Ausgang der Decodiereinrichtung 37 ist über einen zweiten Addierer 16 mit dem ersten Eingang des Umschalters 19 verbunden, dessen Ausgang mit dem Eingang einer der Quantisierersteuerlogik entsprechenden Decodierersteuerlogik 14 und einem empfangsseitigen Prädiktor 15 verbunden ist. Der Ausgang des empfangsseitigen Prädiktors 15 ist mit dem zweiten Eingang des zweiten Addierers 16 verbunden. Der Steuerausgang der Erkennungsschaltung 12 ist mit dem Steuereingang des Umschalters 19 verbunden.

Der Ausgang des Umschalters 19 bildet den Ausgang 20 des Decoders, an dem die rekonstruierten Bildsignalwerte $s_r = A_r, B_r, C_r,...$ abgegeben werden.

In der gezeichneten Stellung des Umschalters 19 werden in der üblichen Weise aus den am Decodereingang 11 anliegenden DPCM-Werten $\Delta s_c$ die Bildsignalwerte $s_r$ rekonstruiert. Die Decodiereinrichtung 37 entspricht hierbei dem empfangsseitigen Gegenstück zur Reihenschaltung des steuerbaren Quantisierers 3 und des Codierers 7. Aus den codierten DPCM-Werten $\Delta s_c$ werden die quantisierten DPCM-Werte $\Delta s_q$ mit der benötigten Wortbreite wiedergewonnen. Bemerkt die Erkennungsschaltung 12 den Empfang eines Kennungswortes KW, so wird der Umschalter 19 durch das empfangene Korrektursignal EKS betätigt und der nachfolgende PCM-Bildsignalwert s an den Decoderausgang 20 und damit gleichzeitig an die Decoderersteuerlogik 14 und dem empfangsseitigen Prädiktor 15 durchgeschaltet.

Das Einfügen des aus Kennungswort KW und PCM-Bildsignalwert s bestehenden Korrektursignals KS bewirkt einen unregelmäßigen Datenfluß. Selbstverständlich wird während des Empfangs eines Korrektursignals die Taktsteuerung der Decoderersteuerlogik und des empfangsseitigen Prädiktors geändert.

An Stelle eines rekonstruierten Bildsigalwertes $s_r$ wird sowohl der Decoderersteuerlogik als auch dem empfangsseitigen Prädiktor der im Korrektursignal übertragener PCM-Bildsignalwert zugeführt. Ein kontinuierlicher Datenfluß wird wieder durch einen elastischen Speicher erreicht. Eine empfangsseitige Taktsteuerung sorgt für die korrekte Verarbeitung.

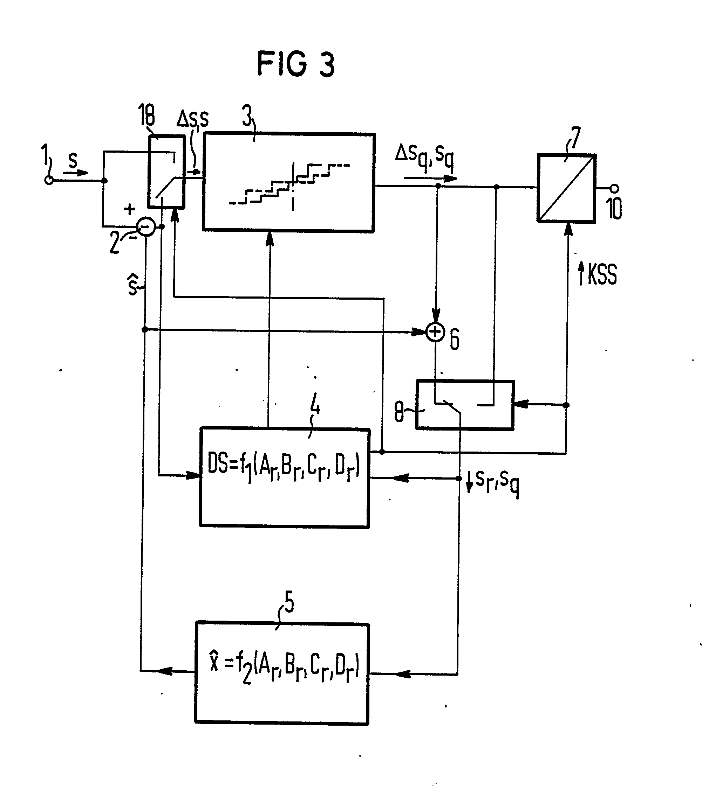

In Fig. 3 ist eine Variante des DPCM-Coders dargestellt. Dem Eingang des steuerbaren Quantisierers 3 ist ein weiterer Umschalter 18 vorgeschaltet, über den der Quantisierereingang direkt an den Codereingang 1 oder -wie üblich -an den Ausgang des Subtrahierers 2 angeschaltet werden kann. Der zweite Umschalter 9 entfällt und im Gegensatz zum DPCM-Codierer nach Fig. 1 ist der zweite Eingang des ersten Umschalters 8 statt mit dem Codereingang 1 an den Ausgang des Quantisierers 3 angeschaltet. Der weitere Umschalter 18 wird wie auch der erste Umschalter 8 von der Quantisierersteuerlogik 4 betätigt.

Bei diesem DPCM-Coder werden bei einer erforderlichen Korrektur die Bildsignalwerte s ebenfalls dem Quantisierer 3 zugeführt um als quantisierte Bildsignalwerte $s_q$ in den Prädiktor 5 eingegeben und codiert ausgesendet zu werden. Da nur bei großen Beträgen der DPCM-Werte s eine direkte Übertragung der quantisierten Bildsignalwerte $s_q$ notwendig ist, kann der Quantisierungsbereich erweitert werden, da kleine Wertebereiche $= | \pm 55 |$ nicht übertragen werden müssen. So ist es beispielsweise möglich, statt eines maximalen DPCM-Wertes von $| \pm 120 |$ quantisierte Bildsignalwerte zwischen 56 und 255 zu übertragen.

Der Fig. 3 entsprechende DPCM-Decoder unterscheidet sich vom in Fig. 2 dargestellten DPCM-Decoder lediglich darin, daß der zweite Eingang des dritten Umschalters 19 an den Ausgang der Decodiereinrichtung 37 angeschaltet ist.

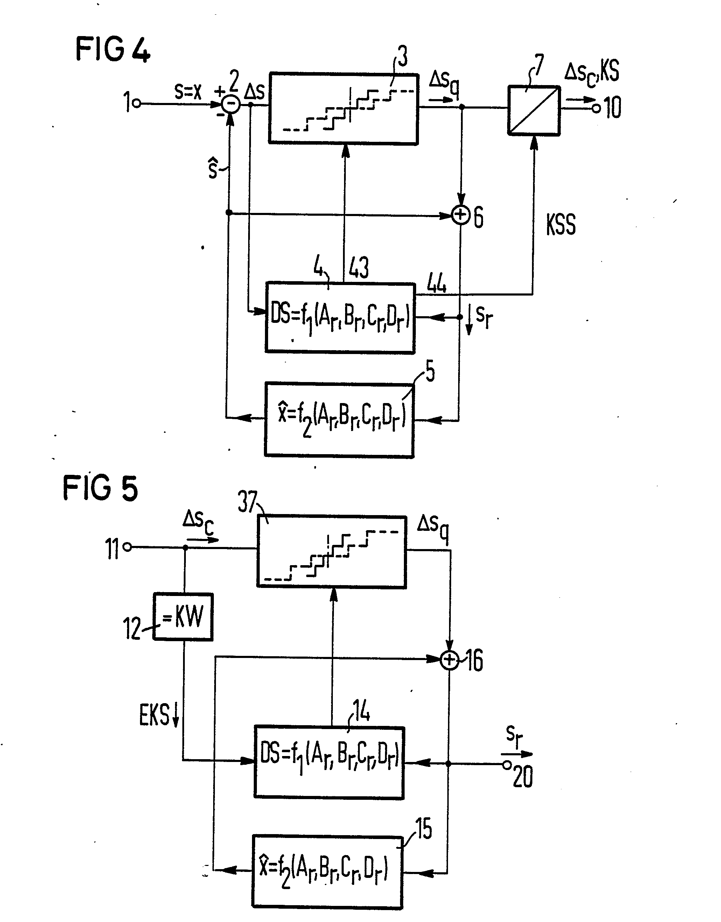

Der in Fig. 4 dargestellte DPCM-Coder unterscheidet sich von dem in Fig. 3 dargestellten DPCM-Coder allein durch das Fehlen der Umschalter 18 und 8. Der Quantisierersteuerlogik 4 werden die Bildsignalwerte $s_r$ zugeführt. Steuerausgänge 43, 44 der Quantisierersteuerlogik führen zum steuerbaren Quantisierer 3 und zum Codierer 7.

Mit dieser Schaltungsanordnung wird wie bisher -wenn eine Umschaltung der Quantisierungskennlinie aufgrund eines betragsmäßig großen DPCM-Wertes $\Delta s$ erforderlich ist -zunächst über den Codierer 7 das Kennungswort eingefügt. Anschließend wird jedoch statt des anliegenden PCM-Bildsignalwertes ein DPCM-Wert ausgesendet. Da hier ebenfalls auf die Übertragung von DPCM-Werten des Umfanges der feinsten Quantisierungskennlinie (gegebenenfalls mehrerer Quantisierungskennlinien) verzichtet werden kann, ist es möglich, unter Verwendung einer zusätzlichen Quantisierungskennlinie QK5 (oder weiterer Quantisierungskennlinien) größere DPCM-Werte als sonst möglich mit ausreichender Quantisierungsgenauigkeit zu übertragen. Den verschiedenen Stufen der zusätzlichen Quantisierungskennlinie QK5 werden wie üblich vom Codierer Binärkombinationen zugeordnet.

Der in Fig. 5 dargestellte DPCM-Decoder unterscheidet sich von dem in Fig. 2 dargestellten DPCM-Decoder durch das Fehlen eines Umschalters 19; an den Ausgang des Addierers 16 sind die Eingänge der empfangsseitigen Quantisierungssteuerlogik 14 und des Prädiktors 15 direkt angeschaltet. Der Ausgang der Erkennungsschaltung 12 ist ebenfalls mit der Decodierersteuerlogik 14 verbunden und schaltet nach Empfang eines Kennungswortes auf die gröbste der üblichen oder auf eine zusätzliche Quantisierungskennlinie aus.

Durch das Einfügen des Kennungswortes sind wiederum elastische Speicher erforderlich, auf deren Darstellung auch hier verzichtet wurde.

Eine Variante besteht darin, daß erst bei Überschreitung eines Schwellwertes S1 = 80 durch den DPCM-Wert $\Delta s$ bei eingeschalteter feinster Quantisierungskennlinie QK1 ein Kennungswort an Stelle des "fehlerhaft" codierten DPCM-Wertes übertragen wird. Empfangsseitig bewirkt dies über die Decodierersteuerlogik 14, daß von der Decodiereinrichtung 37 ein konstanter DPCM-Wert abgegeben wird, der etwa dem Maximalwert $(| \pm 120 |)$ der

gröbsten Quantisierungskennlinie QK4 entspricht. Wird als Kennungswort eine nicht zu Quantisierungszwecken benutzte Binärkombination vom Codierer 7 abgegeben, so ist keinerlei Geschwindungsänderung erforderlich. Steht nur eine einzige Binärkombination zur Verfügung, so wird das notwendige Vorzeichen des konstanten DPCM-Wertes aus den vorherigen rekonstruierten Bildsignalwerten abgeleitet. Ist z.B. der vorherige Bildsignalwert betragsmäßig größer als ein zweiter Stellwert, beispielsweise S2 = 128, so ist das Vorzeichen des Kennungswertes dem des letzten Bildsignalwertes entgegengesetzt übertragen. Diese Variante liefert natürlich keine optimalen Ergebnisse, bewirkt aber trotz des minimalen Aufwandes eine deutliche Verbesserung der Bildqualität.

Eine weitere Variante dieses Verfahrens besteht darin, die am Decoderausgang abgegebenen Bildsignalwerte zu verzögern und kritische Bildsignalwerte durch einen Korrekturwert zu ersetzen, der aus später empfangenen angrenzenden Bildsignalwerten, z.B. aus einem nachfolgenden Bildsignalwert und aus den entsprechenden Bildsignalwerten der folgenden Bildzeile, ermittelt wird.

Bezugszeichenliste

1 Codereingang
2 Subtrahierer
3 Quantisierer
4 Quantisierersteuerlogik
5 Prädiktor
6 Addierer
7 Codierer
8 Umschalter
9 zweiter Umschalten
10 Ausgang des Coders
31 Steuereingang
41 Eingang der Quantisierersteuerlogik 4
42 weiterer Eingang
43 erster Steuerausgang
44 zweiter Steuerausgang
s Bildisignalwert
$\hat{y}$    Schätzwert
$\hat{s}$    Schätzwert
$\Delta s_q$ quantisierter DPCM-Wert
$\Delta s_c$ codierter DPCM-Wert
KW Kennungswort
KSS Korrektursteuersignal
$\Delta s$ DPCM-Wert
$X_r, S_r$ rekonstruierter Bildsignalwert
$S_q$ quantisierter Bildsignalwert
11 Decodereingang
12 Erkennungsschaltung
14 Decodersteuerlogik
15 Prädiktor

16 Addierer
19 Umschalter
20 Ausgang des Decoders
37 Decodiereinrichtung
EKS emfangenes Korrektursignal
18 Umschalter
PK PCM-Korrekturwert
DK quantisierter PMC-Korrekturwert
KS Korrektursignal
QK1 Quantisierungskennlinie
M1 Maximalwert
KD konstanter Korrekturwert
L Fernsehzeile
S1 Schwellwert
DS größte Differenz

## Ansprüche

1. Verfahren zur Verbesserung der Bildqualität, bei dem digitalisierte Bildsignalwerte (s) unter Verwendung einer mehrdimensionalen, insbesondere einer zweidimensionalen, Prädiktion und von umschaltbaren Quantisierungskennlinien (QK1 bis QK4) in quantisierte DPCM-Werte ($\Delta s_q$) umgesetzt werden, **dadurch gekennzeichnet,** daß beim Überschreiten von Maximalwerten ($|\pm M1|$, $|\pm M2|$) einer Quantisierungskennlinie (QK1,QK2) durch den aktuellen DPCM-Wert ($\Delta s$) ein Korrektursignal (KS) übertragen wird und sowohl sendeseitig als auch empfangsseitig der nächste rekonstruierte Bildsignalwert ($X_r$) mit Hilfe desselben Korrekturwertes - (PK,DK) ermittelt wird.

2. Verfahren nach Anspruch 1, **dadurch gekennzeichnet** , daß als Korrektursignal (KS) ein Kennungswort (KW) und ein PCM-Korrekturwert (PK) übertragen wird.

3. Verfahren nach Anspruch 2, **dadurch gekennzeichnet,** daß ein quantisierter PCM-Korrekturwert (DK) übertragen wird.

4. Verfahren nach Anspruch 1, **dadurch gekennzeichnet,** daß als Korrektursignal ein Kennungswort (KW) zur Umschaltung der Quantisierungskennlinie (QK1,QK2) auf eine gröbere Quantisierungskennlinie (QK3,QK4) mit größerem Bereich und ein entsprechend dieser Quantisierungskennlinie (QK3,QK4) quantisierter PCM-Korrekturwert - (DK) übertragen wird.

5. Verfahren nach Anspruch 4, **dadurch gekennzeichnet,** daß stets auf die gröbste Quantisierungskennlinie (QK4) umgeschaltet wird.

6. Verfahren nach Anspruch 4, **dadurch gekennzeichnet,** daß stets auf eine zusätzliche Quantisierungskennlinie (QK5), deren Bereich ($|\pm 55| < s \leq |\pm 255|$) erweitert ist und kleine DPCM-Werte ($\Delta s \leq |\pm 55|$) nicht mehr umfaßt, umgeschaltet wird.

7. Verfahren nach Anspruch 4, **dadurch gekennzeichnet,** daß nur vön der feinsten Quantisierungskennlinie (QK1) auf die gröbste Quantisierungskennlinie (QK4) oder stets auf die zusätzliche Quantisierungskennlinie (QK5) umgeschaltet wird.

8. Verfahren nach Anspruch 4, **dadurch gekennzeichnet,** daß bei Überschreiten eines Schwellwertes (S1) durch den DPCM-Werte ( $\Delta$ s |±S1|)anstelle des verfälschten DPCM-Wertes ($\Delta$ s) nur ein Kennungswort (KW) als Korrektursignal - (KS) übertragen wird und ein konstanter Korrekturwert (KD) verwendet wird.

9. Verfahren nach einem der vorhergehenden Anspruche 5 bis 8, **dadurch gekennzeichnet ,** daß die empfangsseitig rekonstruierten Bindsignale ($s_r$) verzögert werden und daß der kritische Bildsignalwert ' (X) durch Interpolation aus nach diesem übertragenen Bildsignalwerten ($s_{r+1}$, ...) ermittelt wird.

10. Verfahren nach einem der vorhergenden Ansprüche, **dadurch gekennzeichnet,** daß als Kennungswort (KW) eine nicht verwendete Binärkombination (1111) der codierten DPCM-Werte ( $\Delta s_c$ ) übertragen wird.

FIG 1

FIG 2

## FIG 3

## FIG 4

## FIG 5

# FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 403 226 (WINTRINGHAM) * Spalte 9, Zeile 1 - Spalte 13, Zeile 26 * | 1-3 | H 04 N 7/137 H 04 N 7/13 |
| Y | | 4-7,10 | |
| | --- | | |
| X | IEEE TRANSACTIONS ON COMMUNICATIONS, Band COM-15, Nr. 2, April 1967, Seiten 204-208, IEEE, New York, US; F.K. MANASSE: "Directional correlation - A technique to reduce bandwidth in PCM television transmissions" * Seite 205, linke Spalte, Zeilen 3-24; Seite 205, rechte Spalte, Zeile 7 - Seite 206, linke Spalte, Zeile 37; Seite 207, linke Spalte, Zeile 15 - Seite 208, linke Spalte, Zeile 12 * | 1-3 | |
| Y | IDEM | 4-7,10 | RECHERCHIERTE SACHGEBIETE (Int. Cl.4) H 04 N |
| | --- | | |
| X,Y | RADIO MENTOR ELECTRONIC, Band 38, Nr. 10, Oktober 1972, Seiten 489-490, München, DE; H.-G. GIESE et al.: "Ein Redundanzreduktionsverfahren für digitale Fernsehübertragungen" * Insgesamt * | 1-3 | |
| | --- -/- | | |

Der vorliegende Recherchenbericht wurde für alle Patentansprüche erstellt.

| Recherchenort DEN HAAG | Abschlußdatum der Recherche 07-07-1986 | Prüfer VERSCHELDEN J. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 422 227 (BROWN) <br> * Spalte 1, Zeile 69 - Spalte 2, Zeile 32; Spalte 2, Zeile 50 - Spalte 5, Zeile 48; Spalte 10, Zeilen 37-65 * <br><br> --- | 4-7,10 | |
| A | FUNKSCHAU, Band 45, Nr. 16, August 1973, Seiten 591-593, München, DE; H. SCHÖNFELDER: "Nachrichtenreduktion für Bildsignale" <br> * Seite 592, rechte Spalte, Zeile 31 - Seite 393, rechte Spalte, Zeile 15 * <br><br> --- | 1-3 | |
| A | US-A-4 217 609 (HATORI) <br><br> * Spalte 8, Zeile 63 - Spalte 12, Zeile 22; Spalte 14, Zeile 56 - Spalte 16, Zeile 21; Spalte 17, Zeilen 22-55; Spalte 21, Zeile 12 - Spalte 23, Zeile 43 * <br><br> --- | 1,3,5, 7 | RECHERCHIERTE SACHGEBIETE (Int. Cl.4) |
| A | US-A-3 761 613 (LIMB) <br><br> * Spalte 3, Zeile 44 - Spalte 5, Zeile 42; Spalte 10, Zeile 3 - Spalte 11, Zeile 11; Spalte 12, Zeile 63 - Spalte 13, Zeile 19 * <br><br> ----- | 1,3,5, 7 | |

Der vorliegende Recherchenbericht wurde für alle Patentansprüche erstellt.

| Recherchenort <br> DEN HAAG | Abschlußdatum der Recherche <br> 07-07-1986 | Prüfer <br> VERSCHELDEN J. |
|---|---|---|